# EUROPÄISCHE PATENTSCHRIFT

(11) **EP 2 847 016 B1**
(45) Veröffentlichungstag und Bekanntmachung des Hinweises auf die Patenterteilung: **18.05.2016**
(21) Anmeldenummer: 13726417.2
(22) Anmeldetag: 10.05.2013
(51) Int. Cl.: B60K 7/00, F16D 27/00, B60K 17/04

(54) **ANTRIEBSVORRICHTUNG FÜR KRAFTFAHRZEUGE**
DRIVE DEVICE FOR MOTOR VEHICLES
DISPOSITIF D'ENTRAÎNEMENT POUR VÉHICULES À MOTEUR

(30) Priorität: 10.05.2012 DE 102012009199
(43) Veröffentlichungstag der Anmeldung: 18.03.2015
(73) Patentinhaber: Goldhofer Aktiengesellschaft, 87700 Memmingen (DE)
(72) Erfinder: BÖER, Thomas, 87781 Ungerhausen (DE); BAADER, Armin, 87746 Erkheim (DE)
(74) Vertreter: Lemke, Jörg-Michael
(86) Internationale Anmeldenummer: PCT/EP2013/001386
(87) Internationale Veröffentlichungsnummer: WO 2013/167279

(56) Entgegenhaltungen:
- EP-A2- 1 331 127
- EP-A2- 2 416 027
- DE-A1- 2 127 410
- DE-A1- 10 121 372
- DE-A1-102011 100 060
- US-A1- 2003 047 402
- US-A1- 2004 164 505

## Beschreibung

Die Erfindung betrifft eine Antriebsvorrichtung für Kraftfahrzeuge mit einem oder mehreren jeweils mindestens einem auf einem Achsschenkel rotierbaren Antriebsrad zugeordneten und dieses über ein Untersetzungsgetriebe antreibenden Elektromotor, wobei das Untersetzungsgetriebe in die Radnabe des jeweiligen Antriebsrades eingebaut ist, und wobei eine Trenneinrichtung zum Koppeln und Entkoppeln des jeweiligen Elektromotors vom jeweiligen Getriebe vorgesehen ist.

Eine solche Antriebsvorrichtung ist aus der DE 101 21 372 A1 bekannt. Die dort vorhandene Trenneinrichtung ist ein von außen manuell bedienbares Element zwischen Motor und Getriebe, das beim Ausfall des Elektromotors die Abkoppelung des Getriebes ermöglichen soll. Zwar wird angegeben, dass auch eine elektrische oder pneumatische Trennung von der Innenseite des Fahrzeuges her realisierbar sein solle, doch wird kein Weg zur Verwirklichung einer derartigen Trenneinrichtung aufgezeigt.

Ferner ist aus der DE 21 27 410 eine Antriebsvorrichtung dieser Art bekannt, bei welcher der Achsschenkel als Achsrohr ausgebildet ist und als Trenneinrichtung eine Reibkupplung und somit nur eine kraftschlüssige Kraftübertragung zwischen dem Elektromotor und einer in dem Achsrohr gelagerten Antriebswelle angeordnet ist.

Die der Erfindung zugrunde liegende Aufgabe wird nun darin gesehen, eine Antriebsvorrichtung der eingangs erwähnten Bauart zu schaffen, bei der nicht nur die genannte Trennung vom Fahrer des Kraftfahrzeugs bewirkt werden kann, und zwar weniger bei Ausfall eines Motors als bei der Forderung, das Kraftfahrzeug ohne eigenen Antrieb mit höherer Geschwindigkeit schleppen lassen zu können, als dies der Auslegung der Elektromotor-Getriebe-Einheit(en) entspricht. Diese können nämlich Schaden nehmen, wenn sie gezwungen würden, mit zu hoher Geschwindigkeit zu laufen, denn sie sind in der Regel für Grenzdrehzahlen von nur etwa 30 km/h ausgelegt. Vielmehr soll die Antriebsverbindung außerdem eine besonders hohe Zuverlässigkeit und eine besonders lange Lebensdauer aufweisen.

Diese Aufgabe wird erfindungsgemäß gelöst durch eine Vorrichtung nach Patentanspruch 1. Weiterbildungen der Vorrichtung sind Gegenstand der Unteransprüche

Somit kann in der Ausrückstellung das jeweils antriebslose Antriebsrad mit höherer Drehzahl rotieren und damit das Kraftfahrzeug mit größerer Geschwindigkeit gefahren werden, beispielsweise gezogen werden, als dies in der Einrückstellung der Antriebswelle und dabei einem Mitrotieren des Rotors des Elektromotors möglich wäre. Ferner wird durch die Formschlüssigkeit der Kraftübertragungen eine besonders hohe Zuverlässigkeit und eine besonders lange Lebensdauer der Vorrichtung erreicht.

Zweckmäßig ist dabei für die formschlüssige Kraftübertragung motorseitig eine Kombination aus einem ersten Zahnwellenende der Antriebswelle und einem Innenzahnkranz des Rotors des Elektromotors als erstem Innenzahnkranz einerseits, und getriebeseitig eine Kombination aus einem zweiten Zahnwellenende der Antriebswelle und einem Innenzahnkranz des Untersetzungsgetriebes als zweitem Innenzahnkranz andererseits vorgesehen.

Ferner wird bei einer bevorzugten Ausführungsform für das Verschieben in die und das Halten in der Einrückstellung der Antriebswelle ein dem Elektromotor koaxial benachbarter eingeschalteter Elektromagnet, sowie für die Rückführung der Antriebswelle in die Ausrückstellung bei ausgeschaltetem Elektromagnet eine auf das getriebeseitige Ende der Antriebswelle wirkende Druckfeder verwendet, welche die erforderliche Rückstellkraft besitzt, um die Antriebswelle bei ausgeschaltetem Elektromagneten in die Ausrückstellung zu verbringen. Diese Ausgestaltung hat den Vorteil, dass bei einem Ausfall der Stromversorgung des Elektromagneten die Antriebswelle automatisch von der Druckfeder in die Ausrückstellung verbracht und die Antriebsverbindung somit unterbrochen wird.

Die Erfindung wird im Folgenden anhand eines in der Zeichnung dargestellten Ausführungsbeispiels näher erläutert.

Es zeigt:
Fig. 1 eine Draufsicht auf ein Ausführungsbeispiel der Erfindung in Form einer Antriebs-Pendelachse mit zwei angetriebenen Zwillingsrädern;
Fig. 2 einen Schnitt durch das Ausführungsbeispiel längs der Linie II-II in Fig. 1 in vergrößertem Maßstab und mit der Antriebswelle in ausgerückter Stellung;
Fig. 3 eine schaubildliche Ansicht des Schnitts nach Fig. 2;
Fig. 4 eine schaubildliche Ansicht des Schnitts nach Fig. 2 mit der Antriebswelle in eingerückter Stellung.

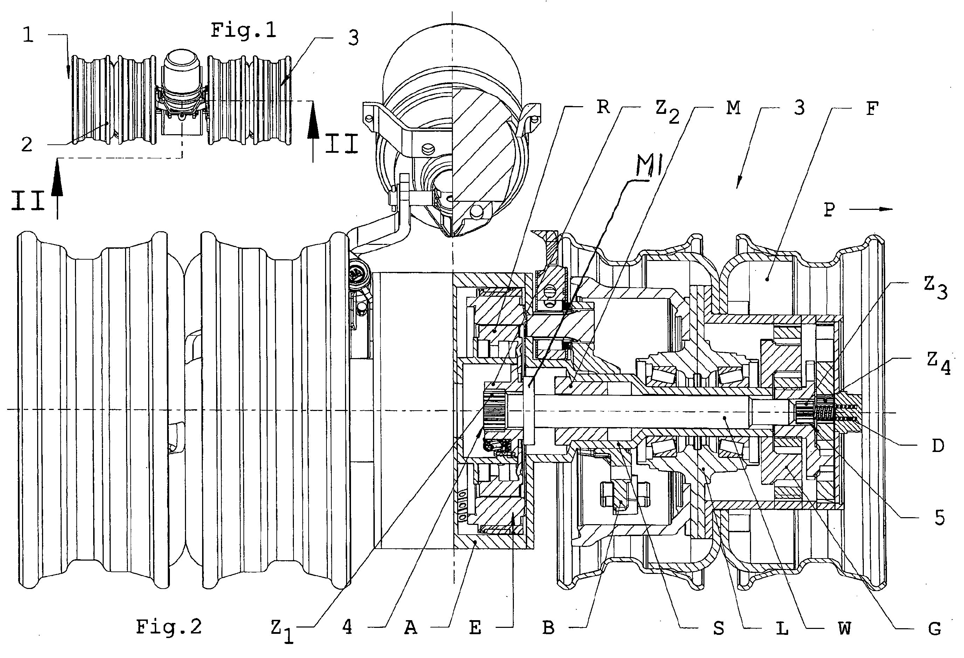

Das betreffende Kraftfahrzeug, das zweckmäßig mit einem von einem Verbrennungsmotor angetriebenen Generator, aber auch nur mit einer Batterie bzw. einem Akkumulator oder mit einer Verbindungseinrichtung zu einem stationären Stromnetz für die Speisung des bzw. der Elektromotors bzw. Elektromotoren ausgerüstet sein kann, ist nicht gezeigt. Gezeigt ist als Ausführungsbeispiel für die Erfindung eine Antriebs-Pendelachse 1 mit zwei angetriebenen Zwillingsrädern 2 und 3, von denen in den Fig. 2 bis 4 jeweils das rechte Zwillingsrad 3 geschnitten dargestellt ist, um den inneren Aufbau zu zeigen.

Das Zwillingsrad 3 ist auf einem Achsschenkel S rotierbar und wird von einem Elektromotor E über ein Untersetzungsgetriebe, hier ein zweistufiges Planetengetriebe G, angetrieben. Das Planetengetriebe G und eine Bremse B sind in die Radnabe des Antriebsrades 3 eingebaut. Ferner ist eine Trenneinrichtung vorgesehen, die weiter unten erläutert wird.

Der Achsschenkel S ist als Achsrohr ausgebildet, in dem eine Antriebswelle W rotierbar gelagert ist. Die Antriebswelle W ist an ihrem inneren Ende 4 mit einem Rotor R des Elektromotors E und an ihrem äußeren Ende 5 mit dem Eingang des Planetengetriebes G in Antriebsverbindung bringbar, wenn ein Antrieb erfolgen soll. Die Antriebswelle W ist in ihrer Axialrichtung zwischen einer Einrückstellung, in welcher zwischen Elektromotor E und Antriebswelle W einerseits und Antriebswelle W und Planetengetriebe G andererseits eine formschlüssige Kraftübertragung und damit die genannte Antriebsverbindung besteht, und einer Ausrückstellung, in welcher die genannte Kraftübertragung und damit die Antriebsverbindung aufgehoben sind, hin und her verschiebbar und bildet dabei auch eine Trenneinrichtung.

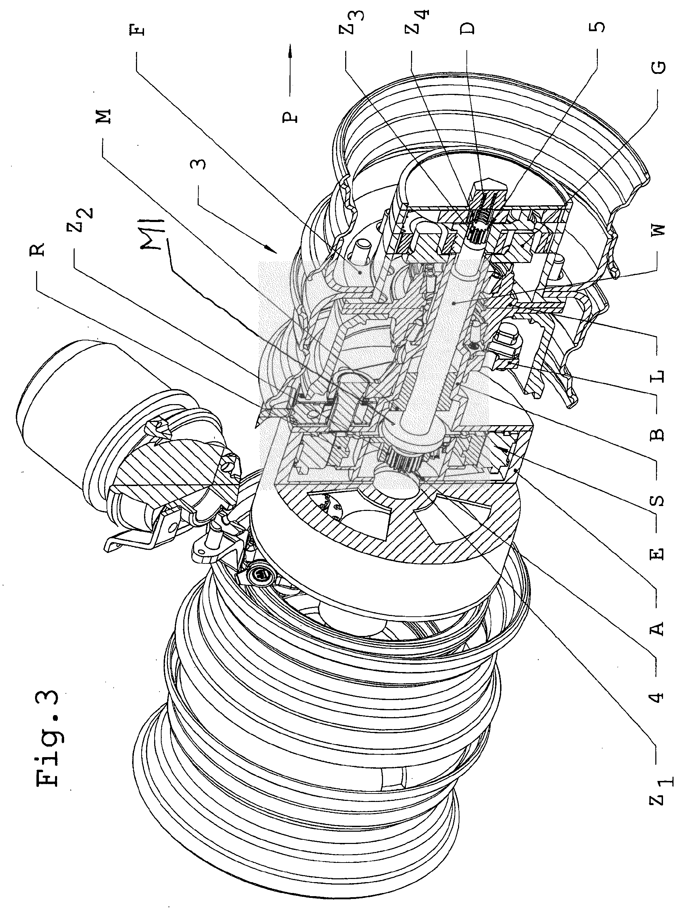

In den Fig. 2 und 3 ist jeweils die Ausrückstellung gezeigt, in welcher die Antriebswelle W sich außer Eingriff mit dem Rotor R einerseits und mit dem Planetengetriebe R andererseits befindet.

Vorteilhaft sind nun für die formschlüssige Kraftübertragung motorseitig eine Kombination aus einem ersten Außenzahnkranz Z₁ am inneren Ende 4 der Antriebswelle W und einem ersten Innenzahnkranz Z₂ des Rotors R des Elektromotors E als erstem Innenzahnkranz einerseits, und getriebeseitig eine Kombination aus einem zweiten Außenzahnkranz Z₃ am äußeren Ende 5 der Antriebswelle W und einem Innenzahnkranz Z₄ des Planetengetriebes G als zweitem Innenzahnkranz andererseits vorgesehen.

Bei dem gezeigten Ausführungsbeispiel sind nun für das Verschieben in die und das Halten in der Einrückstellung der Antriebswelle W in Pfeilrichtung P ein dem Elektromotor E koaxial benachbarter eingeschalteter Elektromagnet M, sowie für die Rückführung der Antriebswelle W in die gezeigte Ausrückstellung bei ausgeschaltetem Elektromagnet M eine auf das getriebeseitige Ende der Antriebswelle W wirkende Druckfeder D vorgesehen.

Dabei ist die Anordnung so getroffen, dass von dem die Antriebswelle W koaxial umgebenden Elektromagneten M bei seiner Bestromung eine auf der Antriebswelle W koaxial angeordnete und mit ihr fest verbundene Scheibe M1 anziehbar ist, derart, dass die Scheibe M1 an der ihr gegenüberliegenden Stirnseite des Elektromagneten M zur Anlage bringbar ist und dadurch die Antriebswelle W in der Pfeilrichtung P in ihre Einrückstellung verschiebbar und dort festhaltbar ist.

Die Scheibe M1 kann auch ein an der Antriebswelle W angeformter Bund sein.

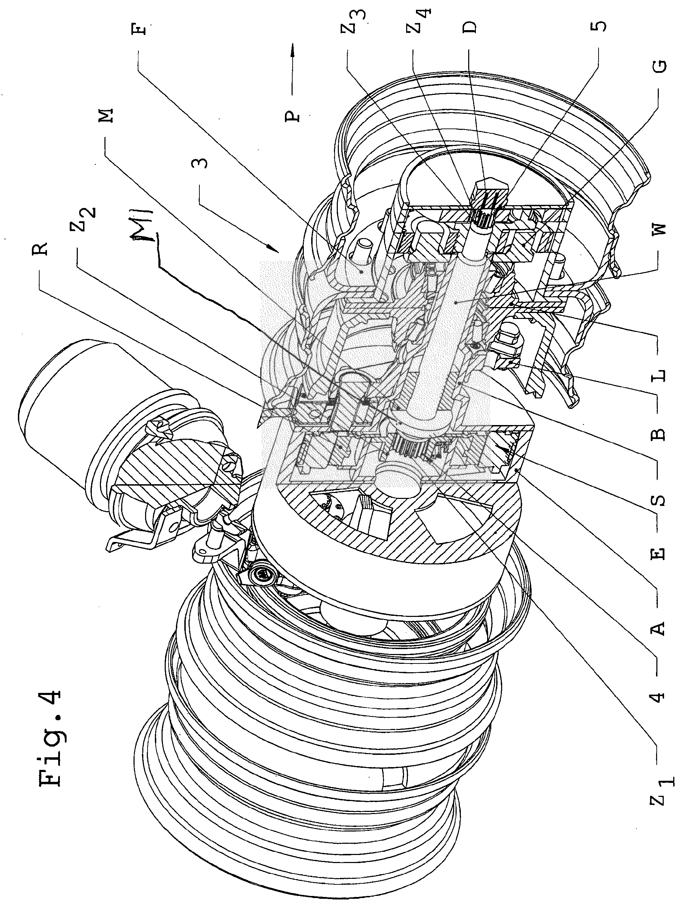

Wird somit das Solenoid bzw. der Elektromagnet M eingeschaltet, dann rückt die Antriebswelle W aus ihrer in den Fig. 2 und 3 dargestellten Ausrückstellung in Pfeilrichtung P nach rechts in ihre in Fig. 4 gezeigte Einrückstellung, in der sich die beiden Zahnpaarungen Z₁, Z₂ und Z₃, Z₄ jeweils in Eingriff miteinander befinden.

## Patentansprüche

1. Antriebsvorrichtung für Kraftfahrzeuge mit einem oder mehreren jeweils mindestens einem auf einem Achsschenkel rotierbaren Antriebsrad (2; 3) zugeordneten und dieses über ein Untersetzungsgetriebe (G) antreibenden Elektromotor (E), wobei das Untersetzungsgetriebe (G) in die Radnabe des jeweiligen Antriebsrades eingebaut ist, und wobei eine Trenneinrichtung zum Koppeln und Entkoppeln des jeweiligen Elektromotors (E) vom jeweiligen Getriebe (G) vorgesehen ist,
**dadurch gekennzeichnet,**
**dass** der Achsschenkel (S) als Achsrohr ausgebildet ist, in dem eine Antriebswelle (W) rotierbar gelagert ist, welche Antriebswelle (W) sowohl an ihrem inneren Ende (4) mit dem Rotor (R) des Elektromotors (E) als auch an ihrem äußeren Ende (5) mit dem Eingang des Untersetzungsgetriebes (G) jeweils in eine Antriebsverbindung bringbar ist, wenn ein Antrieb erfolgen soll, und
**dass** dabei die Antriebswelle (W) in ihrer Axialrichtung zwischen einer Einrückstellung, in welcher zwischen Elektromotor (E) und Antriebswelle (W) einerseits und Antriebswelle (W) und Untersetzungsgetriebe (G) andererseits jeweils eine formschlüssige Kraftübertragung und damit die genannte Antriebsverbindung besteht, und einer Ausrückstellung, in welcher die genannten formschlüssigen Kraftübertragungen und damit die Antriebsverbindung aufgehoben sind, hin und her verschiebbar ist und dabei auch die Trenneinrichtung bildet.

2. Antriebsvorrichtung nach Anspruch 1,
**dadurch gekennzeichnet,**
**dass** für die formschlüssige Kraftübertragung motorseitig eine Kombination aus einem ersten Außenzahnkranz (Z₁) am inneren Ende (4) der Antriebswelle (W) und einem Innenzahnkranz (Z₂) des Rotors (R) des Elektromotors (E) als erstem Innenzahnkranz einerseits, und getriebeseitig eine Kombination aus einem zweiten Außenzahnkranz (Z₃) am äußeren Ende (5) der Antriebswelle (W) und einem Innenzahnkranz (Z₄) des Planetengetriebes (G) als zweitem Innenzahnkranz andererseits vorgesehen ist.

3. Antriebsvorrichtung nach Anspruch 1 oder 2,
**dadurch gekennzeichnet,**
**dass** für das Verschieben in die und das Halten in der Einrückstellung der Antriebswelle (W) ein dem Elektromotor (E) koaxial benachbarter eingeschalteter Elektromagnet (M), sowie für die Rückführung der Antriebswelle (W) in die Ausrückstellung bei ausgeschaltetem Elektromagnet (M) eine auf das getriebeseitige Ende der Antriebswelle (W) wirkende Druckfeder (D) vorgesehen sind.

4. Antriebsvorrichtung nach Anspruch 3,
**dadurch gekennzeichnet,**
**dass** von dem die Antriebswelle (W) koaxial umgebenden Elektromagneten (M) bei seiner Bestromung eine auf der Antriebswelle (W) koaxial angeordnete und mit ihr fest verbundene Scheibe (M1) anziehbar ist, derart, dass die Scheibe (M1) an der ihr gegenüberliegenden Stirnseite des Elektromagneten (M) zur Anlage bringbar ist und dadurch die Antriebswelle (W) in Axialrichtung (P) in ihre Einrückstellung verschiebbar und dort festhaltbar ist.

## Claims

1. Drive device for motor vehicles, having one or more electric motors (E) which is/are assigned to in each case at least one drive wheel (2; 3) rotatable on a steering stub and which drives/drive said drive wheel via a speed-reduction gearing (G), wherein the speed-reduction gearing (G) is installed into the wheel hub of the respective drive wheel, and wherein a separating device is provided for the coupling and decoupling of the respective electric motor (E) from the respective gearing (G),
**characterized**
**in that** the steering stub (S) is in the form of an axle tube in which a drive shaft (W) is rotatably mounted, which drive shaft (W) can be connected in terms of drive in each case both at its inner end (4) to the rotor (R) of the electric motor (E), and at its outer end (5) to the input of the speed-reduction gearing (G), if a drive action is to be imparted, and
**in that**, here, the drive shaft (W) is displaceable back and forth in its axial direction between an engagement position, in which there is a positively locking power transmission action, and thus the stated drive connection, in each case firstly between the electric motor (E) and drive shaft (W) and secondly between the drive shaft (W) and speed-reduction gearing (G), and a disengagement position, in which the stated positively locking power transmission actions and thus the drive connection are eliminated, and here, said drive shaft also forms the separating device.

2. Drive device according to Claim 1,
**characterized**
**in that**, for the positively locking power transmission action, firstly, at the motor side, there is provided a combination of a first outer toothed ring (Z₁) on the inner end (4) of the drive shaft (W) and an inner toothed ring (Z₂) of the rotor (R) of the electric motor (E), as a first inner toothed ring, and secondly, at the gearing side, there is provided a combination of a second outer toothed ring (Z₃) on the outer end (5) of the drive shaft (W) and an inner toothed ring (Z₄) of the planetary gear set (G), as a second inner toothed ring.

3. Drive device according to Claim 1 or 2,
**characterized**
**in that**, for the displacement into and holding in the engagement position of the drive shaft (W), an activated electromagnet (M) coaxially adjacent to the electric motor (E) is provided, and for the return of the drive shaft (W) into the disengagement position when the electromagnet (M) is deactivated, a pressure spring (D) which acts on the gearing-side end of the drive shaft (W) is provided.

4. Drive device according to Claim 3,
**characterized**
**in that** the electromagnet (M) which coaxially surrounds the drive shaft (W) can, when energized, attract a disc (M1) which is arranged coaxially on and fixedly connected to the drive shaft (W), such that the disc (M1) can be placed in contact with the face side, facing toward said disc, of the electromagnet (M), and in this way the drive shaft (W) can be displaced in the axial direction (P) into its engagement position and held fixedly therein.

## Revendications

1. Dispositif d'entraînement pour véhicules à moteur comprenant un ou plusieurs moteurs électriques (E) à chaque fois associés au moins à une roue motrice (2 ; 3) pouvant tourner sur une fusée d'essieu et entraînant celle-ci par le biais d'une transmission à réducteur (G), la transmission à réducteur (G) étant intégrée dans le moyeu de roue de la roue motrice respective, et un dispositif de séparation étant prévu pour accoupler le moteur électrique respectif (E) à la transmission respective (G) et le désaccoupler de celle-ci,
**caractérisé en ce que**
la fusée d'essieu (S) est réalisée sous forme de tube d'essieu dans lequel un arbre d'entraînement (W) est supporté de manière rotative, lequel arbre d'entraînement (W) peut être amené en liaison d'entraînement à chaque fois à la fois au niveau de son extrémité intérieure (4) avec le rotor (R) du moteur électrique (E) ainsi qu'au niveau de son extrémité extérieure (5) avec l'entrée de la transmission à réducteur (G) si un entraînement doit avoir lieu et **en ce qu'**en l'occurrence, l'arbre d'entraînement (W) peut être déplacé d'avant en arrière dans sa direction axiale entre une position d'embrayage, dans laquelle un transfert de force par engagement par correspondance de formes et par conséquent ladite liaison d'entraînement existent à chaque fois entre le moteur électrique (E) et l'arbre d'entraînement (W) d'une part et l'arbre d'entraînement (W) et la transmission à réducteur (G) d'autre part, et une position de débrayage, dans laquelle lesdits transferts de force par engagement par correspondance de formes et par conséquent la liaison d'entraînement sont supprimés, et forme en l'occurrence également le dispositif de séparation.

2. Dispositif d'entraînement selon la revendication 1,
**caractérisé en ce que**
pour le transfert de force par engagement par correspondance de formes il est prévu du côté du moteur, une combinaison d'une première couronne dentée extérieure (Z₁) au niveau de l'extrémité intérieure (4) de l'arbre d'entraînement (W) et d'une couronne dentée intérieure (Z₂) du rotor (R) du moteur électrique (E) en tant que première couronne dentée intérieure d'une part, et du côté de la transmission, une combinaison d'une deuxième couronne dentée extérieure (Z₃) au niveau de l'extrémité extérieure (5) de l'arbre d'entraînement (W) et d'une couronne dentée intérieure (Z₄) de la transmission planétaire (G) en tant que deuxième couronne dentée intérieure d'autre part.

3. Dispositif d'entraînement selon la revendication 1 ou 2,
**caractérisé en ce que**
pour le déplacement et le maintien dans la position embrayée de l'arbre d'entraînement (W), il est prévu un électroaimant (M) enclenché et coaxialement adjacent au moteur électrique (E) et pour le retour de l'arbre d'entraînement (W) dans la position débrayée lorsque l'électroaimant (M) est déconnecté, il est prévu un ressort de compression (D) agissant sur l'extrémité côté transmission de l'arbre d'entraînement (W).

4. Dispositif d'entraînement selon la revendication 3,
**caractérisé en ce**
**qu'**un disque (M1) disposé coaxialement sur l'arbre d'entraînement (W) et connecté fixement à celui-ci peut être attiré par l'électroaimant (M) entourant coaxialement l'arbre d'entraînement (W) lorsque l'électroaimant est alimenté en courant, de telle sorte que le disque (M1) puisse être amené en appui au niveau du côté frontal de l'électroaimant (M) qui lui est opposé et que de ce fait l'arbre d'entraînement (W) puisse être déplacé et fixé dans la direction axiale (P) dans sa position embrayée.
